# EUROPEAN PATENT SPECIFICATION

(11) **EP 2 980 772 B1**
(45) Date of publication and mention of the grant of the patent: **14.02.2018**
(21) Application number: 15176733.2
(22) Date of filing: 14.07.2015
(51) Int. Cl.: G08G 5/00, G01C 23/00

(54) **SYSTEM AND METHOD FOR AUTOMATICALLY IDENTIFYING DISPLAYED ATC MENTIONED TRAFFIC**
SYSTEM UND VERFAHREN ZUR AUTOMATISCHEN IDENTIFIZIERUNG VON ANGEZEIGTEM, VON DER FLUGSICHERUNG ERWÄHNTEM VERKEHR
SYSTÈME ET PROCÉDÉ D'IDENTIFICATION AUTOMATIQUE DE TRAFIC MENTIONNÉ ATC AFFICHÉ

(30) Priority: 28.07.2014 US 201414444473
(43) Date of publication of application: 03.02.2016
(73) Proprietor: Honeywell International Inc., Morris Plains, NJ 07950 (US)
(72) Inventor: SAMUTHIRAPANDIAN, Subash, Morristown, NJ New Jersey 07962-2245 (US); JOHNSON, Markus Alan, Morristown, NJ New Jersey 07962-2245 (US)
(74) Representative: Houghton, Mark Phillip

(56) References cited:
- US-A- 6 160 497
- US-A1- 2004 130 479
- US-A1- 2006 030 994
- US-A1- 2006 265 109
- US-A1- 2011 291 861
- US-A1- 2012 182 161

## Description

### TECHNICAL FIELD

The exemplary embodiments described herein generally relate to aircraft display systems and more particularly to systems and methods for identifying and emphasizing an air traffic control (ATC) mentioned aircraft.

### BACKGROUND

It is important for pilots to know the position of other aircraft in their airspace that may play a role relating to flight safety. During approach, for example, ATC may request a pilot to locate traffic visually out the window. Pilots typically use a cockpit traffic display system as a tool to identify the ATC mentioned traffic, and to help locate that traffic visually. There is pilot workload involved in identifying the ATC mentioned traffic on the cockpit display system. Numerous aircraft may be displayed in the area of the specific traffic in question at the moment. Typical displays that illustrate other aircraft show text to provide important information such as altitude. This text occupies much of the screen when there are several aircraft being displayed, thereby increasing the chance for confusion. Furthermore, the pilot must interpret the information provided in the text occupying his thought processes when he may have many other decisions to make.

With increased availability of Automated Dependent Surveillance Broadcast (ADSB) installations, Cockpit Display of Traffic Information (CDTI) displays can show surrounding traffic with increased accuracy and provide improved situation awareness. In the ADSB system, aircraft transponders receive GPS signals and determine the aircraft's precise position, which is combined with other data and broadcast to other aircraft and air traffic controllers. This display of surrounding traffic increases the pilot's awareness of traffic in addition to that provided by Air Traffic Control. One known application allows approach in-trail procedures and enhanced visual separation and station keeping. With the CDTI display, flight crews can find the in-trail target on the display and then follow the target. However, when the number of ADSB targets becomes numerous, particularly in the vicinity of an airport, identifying a specific target efficiently on a CDTI display can be time consuming. For in-trail targets, pilots are typically given a tail number by ATC, which must often be typed into the CDTI display by the pilot. This procedure allows for errors by the pilot potentially typing in the incorrect number and is time consuming.

Accordingly, it is desirable to provide systems and methods of automatically identifying and emphasizing an ATC mentioned aircraft. Furthermore, other desirable features and characteristics of the exemplary embodiments will become apparent from the subsequent detailed description and the appended claims, taken in conjunction with the accompanying drawings and the foregoing technical field and background.

US2006/265109A1 discloses an aircraft cockpit display device for information concerning surrounding traffic. The device includes devices to receive information coming from outside the aircraft, to know the flight parameters of the aircraft, to calculate projected trajectories of the aircraft and of a detected aircraft in the immediate vicinity, and to display a representation of the surrounding traffic through symbols and potential messages based on instructions received. A display command device is connected to an on-board calculator to know the flight phase of the aircraft. The display command device has a filtering device to define for each flight phase and/or crew task the nature and the level of information to be displayed.

### BRIEF SUMMARY

The present invention provides a method for displaying a plurality of aircraft by a display system associated with an ownship, according to claim 1 of the appended claims.

The invention further provides a display system for displaying a plurality of aircraft, according to claim 2 of the appended claims.

A system and method are provided for identifying and emphasizing an ATC mentioned aircraft.

In an exemplary embodiment, a method for displaying a plurality of vehicles by a display system associated with a first vehicle of the plurality of vehicles, the display system including a data link unit, a processor, and a display, comprising receiving information via the data link unit, the information including a vehicle manufacturer, a vehicle model, a vehicle owner, a vehicle position, and a vehicle category; determining by the processor if a second vehicle of the plurality of vehicles is associated with the information; displaying on the display the plurality of vehicles; and emphasizing on the display the second vehicle if associated with the information.

In another exemplary embodiment, a method for displaying a plurality of aircraft by a display system associated with an ownship of the plurality of aircraft, the display system including a data link unit, a processor, and a display, comprising receiving information via the data link unit from a controlling agency, the information including aircraft manufacturer, aircraft model, aircraft service provider, aircraft position, and aircraft category; determining by the processor if a first aircraft of the plurality of aircraft is associated with the information; displaying on the display the plurality of aircraft; and emphasizing on the display the first aircraft if associated with the information.

In yet another exemplary embodiment, a display system for displaying a plurality of vehicles, the display system associated with a first vehicle of the plurality of vehicles, the display system comprising a data link unit configured to receive information from a controlling agency, the information including vehicle manufacturer, vehicle model, vehicle service provider, vehicle position, and vehicle category; a processor configured to determine if a second vehicle of the plurality of vehicles is associated with the information; and a display configured to display the plurality of vehicles; and emphasize the second vehicle if associated with the information.

### BRIEF DESCRIPTION OF THE DRAWINGS

The present invention will hereinafter be described in conjunction with the following drawing figures, wherein like numerals denote like elements, and
FIG. 1 is a block diagram of a known display system suitable for use in an aircraft in accordance with the exemplary embodiments described herein;
FIG. 2 is a lateral display of aircraft in accordance with an exemplary embodiment;
FIG. 3 a flow diagram of an exemplary method suitable for use with the display system of FIG. 1 in accordance with the exemplary embodiments; and
FIG. 4 a flow diagram of another exemplary method suitable for use with the display system of FIG. 1 in accordance with the exemplary embodiments.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Further, unless explicitly stated otherwise, each numerical value and range described and/or illustrated herein should be interpreted as being approximate as if the word "about" or "approximately" preceded the value of the value or range.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

While the exemplary embodiments described herein refer to displaying the information on aircraft, the invention may also be applied to other vehicle display systems such as displays in sea going vessels and displays used by off-site controllers, e.g., ground controllers.

The mapping methods described herein may be used with a variety of aircraft, such as planes and helicopters. The aviation environment is described herein as the exemplary embodiment and may include navigation from point to point or approach and landing at an airport. Generally a vertical view display is presented in conjunction with the lateral view presented herein. Various types of maps may be used for display on the lateral view, for example, road maps, terrain maps, aviation maps, and topographical maps.

Some applications may require more than one monitor, for example, a head down display screen, to accomplish the mission. These monitors may include a two dimensional moving map display and a three dimensional perspective display. A moving map display may include a top-down view of the aircraft, the flight plan, and the surrounding environment. Various symbols are utilized to denote navigational cues (e.g., waypoint symbols, line segments interconnecting the waypoint symbols, range rings) and nearby environmental features (e.g., terrain, weather conditions, political boundaries).

Alternate embodiments of the present invention to those described below may utilize whatever navigation system signals are available, for example a ground based navigational system, a GPS navigation aid, a flight management system, and an inertial navigation system, to dynamically calibrate and determine a precise course.

In accordance with the exemplary embodiments, the inventions described herein automatically emphasize, or highlight, traffic mentioned by ATC on a cockpit display system, thereby reducing pilot workload in identifying the ATC mentioned traffic on the cockpit display system.

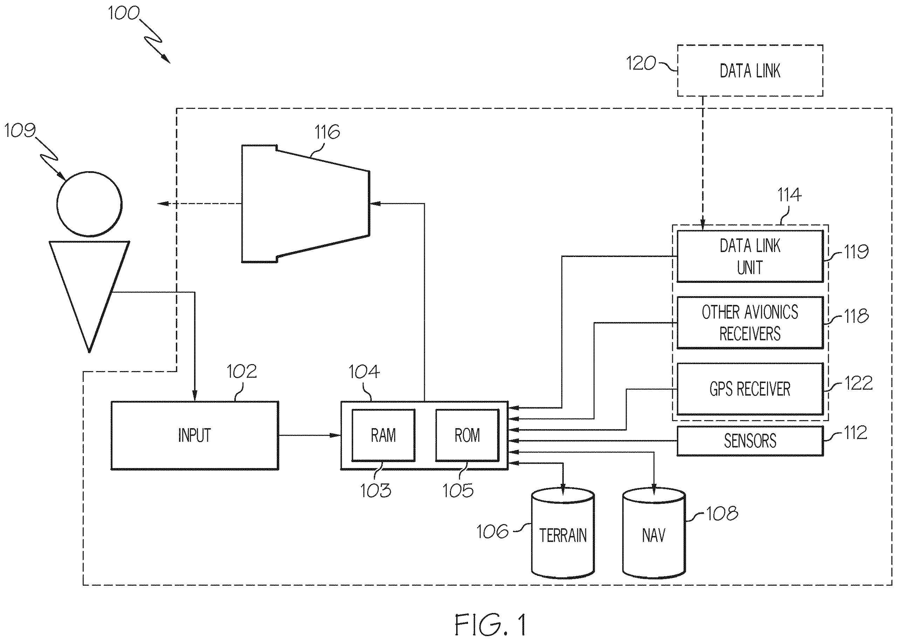

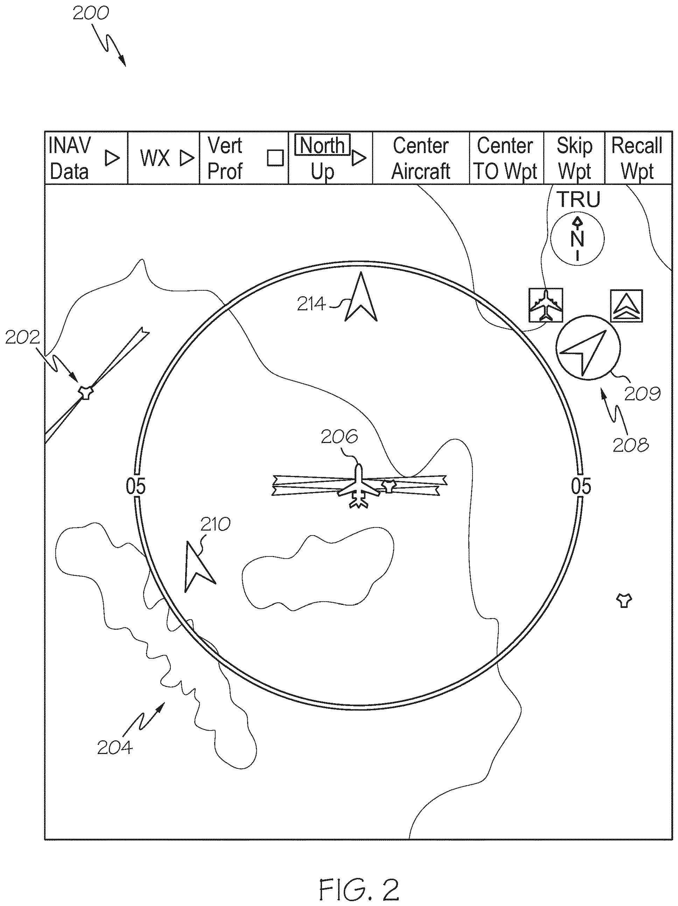

Referring to FIG. 1, an exemplary flight deck display system 100 is depicted and will be described. The system 100 includes a user interface 102, a processor 104, one or more terrain databases 106, one or more navigation databases 108, various sensors 112, various external data sources 114, and a display device 116. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (CCD) (not shown), such as a mouse, a trackball, or joystick, and/or a keyboard, one or more buttons, switches, or knobs. In the depicted embodiment, the user interface 102 includes a CCD and a keyboard (not shown). The user 109 uses the CCD to, among other things, move a cursor symbol on the display screen (see FIG. 2), and may use the keyboard to, among other things, input textual data. It should be understood that several of the blocks described as part of the flight deck display system 100 are optional and not required for the exemplary embodiments, including the input device 102, the terrain database 106, the navigation database 108, and sensors 112, for example.

The processor 104 may be any one of numerous known general-purpose microprocessors or an application specific processor that operates in response to program instructions. In the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits could also be used.

No matter how the processor 104 is specifically implemented, it is in operable communication with the terrain databases 106, the navigation databases 108, and the display device 116, and is coupled to receive various types of inertial data from the various sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display device 116. The display device 116, in response to the display commands, selectively renders various types of textual, graphic, and/or iconic information. The preferred manner in which the textual, graphic, and/or iconic information are rendered by the display device 116 will be described in more detail further below. Before doing so, however, a brief description of the databases 106, 108, the sensors 112, and the external data sources 114, at least in the depicted embodiment, will be provided.

The terrain databases 106 include various types of data representative of the terrain over which the aircraft is flying, and the navigation databases 108 include various types of navigation-related data. These navigation-related data include various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the terrain databases 106 and the navigation databases 108 are, for clarity and convenience, shown as being stored separate from the processor 104, all or portions of either or both of these databases 106, 108 could be loaded into the RAM 103, or integrally formed as part of the processor 104, and/or RAM 103, and/or ROM 105. The terrain databases 106 and navigation databases 108 could also be part of a device or system that is physically separate from the system 100.

The sensors 112 may be implemented using various types of inertial sensors, systems, and or subsystems, now known or developed in the future, for supplying various types of inertial data. The inertial data may also vary, but preferably include data representative of the state of the aircraft such as, for example, aircraft speed, heading, altitude, and attitude. The number and type of external data sources 114 may also vary. For example, the external systems (or subsystems) may include, for example, a terrain avoidance and warning system (TAWS), a traffic and collision avoidance system (TCAS), a runway awareness and advisory system (RAAS), a flight director, and a navigation computer, just to name a few. However, for ease of description and illustration, only a global position system (GPS) receiver 122 is depicted in FIG. 1, and will now be briefly described.

The GPS receiver 122 is a multi-channel receiver, with each channel tuned to receive one or more of the GPS broadcast signals transmitted by the constellation of GPS satellites (not illustrated) orbiting the earth. Each GPS satellite encircles the earth two times each day, and the orbits are arranged so that at least four satellites are always within line of sight from almost anywhere on the earth. The GPS receiver 122, upon receipt of the GPS broadcast signals from at least three, and preferably four, or more of the GPS satellites, determines the distance between the GPS receiver 122 and the GPS satellites and the position of the GPS satellites. Based on these determinations, the GPS receiver 122, using a technique known as trilateration, determines, for example, aircraft position, groundspeed, and ground track angle. These data may be supplied to the processor 104, which may determine aircraft glide slope deviation therefrom. Preferably, however, the GPS receiver 122 is configured to determine, and supply data representative of, aircraft glide slope deviation to the processor 104.

The display device 116, as noted above, in response to display commands supplied from the processor 104, selectively renders various textual, graphic, and/or iconic information, and thereby supply visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display device 116 may additionally be implemented as a panel mounted display, a HUD (head-up display) projection, or any one of numerous known technologies. It is additionally noted that the display device 116 may be configured as any one of numerous types of aircraft flight deck displays. For example, it may be configured as a multi-function display, a horizontal situation indicator, or a vertical situation indicator, just to name a few. In the depicted embodiment, however, the display device 116 is configured as a primary flight display (PFD).

The data link unit 119 enables the host aircraft to communicate with Air Traffic Control (ATC) via a data link 120. In this regard, the data link unit 119 may be used to provide ATC data to the host aircraft and/or to send information from the host aircraft to ATC, preferably in compliance with known standards and specifications. Using the data link unit 119, the ownship 206 (host aircraft) can receive ITP clearance or authorization from ATC (when appropriate) such that the pilot can initiate the requested instructions.

In operation, the display system 100 is also configured to process the current flight status data for the host aircraft 206. In this regard, the sources 106, 108, 112, 114 of flight status data generate, measure, and/or provide different types of data related to the operational status of the host aircraft 206, the environment in which the host aircraft 206 is operating, flight parameters, and the like. In practice, the sources 106, 108, 112, 114 of flight status data may be realized using line replaceable units (LRUs), transducers, accelerometers, instruments, sensors, and other well-known devices. The data provided by the sources 106, 108, 112, 114 of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display system 100 is suitably designed to process data obtained from the sources 106, 108, 112, 114 of flight status data in the manner described in more detail herein. In particular, the display system 100 can use the flight status data of the host aircraft when rendering the ITP display.

It should be understood that FIG. 1 is a simplified representation of a display system 100 for purposes of explanation and ease of description, and FIG. 1 is not intended to limit the application or scope of the subject matter in any way. In practice, the display system 100 and/or aircraft will include numerous other devices and components for providing additional functions and features, as will be appreciated in the art.

During the course of this description, like numbers may be used to identify like elements according to the different figures that illustrate the various exemplary embodiments.

With reference to FIG. 2, the display 116 includes a display area 200 in which multiple graphical images may be simultaneously displayed. Although a top down, or lateral, view is depicted, it is understood that a vertical, or perspective, view could be depicted in accordance with the exemplary embodiments. The display area 200 may also include navigational aids 202, and various map features 204 including, but not limited to, terrain. The display area 200 may also include political boundaries, and terminal and special use airspace areas, which, for clarity, are not shown in FIG. 2. A symbol 206 is displayed the base aircraft which contains the flight deck display system 100. Data is processed for the base aircraft and, when received, for the other aircraft 208, 210, 212 transmitting aircraft related parameters, such as according to the invention, that is, within the ADSB system, or else from a distal source (not shown) such as ground stations or satellites or is transmitted directly from the aircraft 208, 210, 212. The aircraft displayed may be limited to a predefined area, such as within a specified distance from the flight path (pathway). For this first exemplary embodiment of FIG. 2, the data comprises positional data (location and direction) and altitude. An image of each aircraft 208, 210, 212 is displayed on the display area 200 in a location determined by the positional data.

The system and method of the invention obtain ATC to pilot information through a data link via the data link unit 119, and contain for an aircraft associated with the information, e.g., the aircraft manufacturer and a logo associated therewith, aircraft model, service provider, e.g., airline and a logo associated therewith, position (range and direction), and aircraft category, e.g., 2 engine propeller driven aircraft or rotorcraft. Based on this information, an algorithm within the display system 100 identifies and emphasizes the aircraft on the display system 100 automatically.

An exemplary ATC instruction to the ownship 206 comprises:
*ATC: DASSAULT F900, you're number three for the airport, traffic is a Delta Airbus 380 at your 2 o'clock and 6 miles. Plan to follow him, report that traffic in sight.*
From this ATC instruction, the cockpit display system can decode the information, for example, as follows:
aircraft manufacturer = Airbus,
aircraft model = 380,
airline = Delta,
aircraft category (or type) = four engine jet; and
clock position (range and clock hour) = 6 miles and 2 o' clock (right 60 degrees from ownship heading).
Based on the above information, the aircraft 208 is emphasized on display system 100 as shown in FIG. 2.

The emphasizing of the aircraft 208 may be, for example, by a change of format defined by an algorithm. The format may include different displayed sizes, colors, shapes, or images. For example, the ownship 206 may be a first color, the ATC identified aircraft 208 may be a second color, while the remaining aircraft 210, 212 may be a third color. In the exemplary embodiment of FIG. 2, the identified aircraft 208 is emphasized by a circle 209 around the aircraft icon (triangle).

Additionally, the display system may further display an image 214 resembling a model, and/or category of the aircraft 208. Furthermore, the display system may display an image 216 resembling the service provider, or airline, logo, and an image resembling the aircraft manufacture logo. These additional images 214, 216 assist the pilot in visually identifying the actual aircraft 208 outside of the cockpit. The images 214, 216 may be automatically displayed or as claimed by the invention, selected by the pilot.

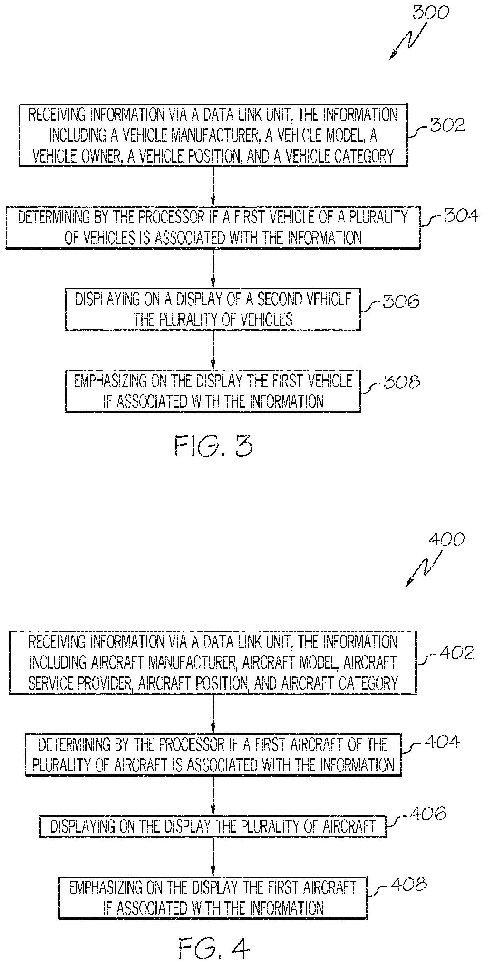

FIG. 3 is a flow chart that illustrates an exemplary embodiment of a method 300 suitable for use with a flight deck display system 100. Method 300 represents one implementation of a method for displaying aircraft approaches or departures on an onboard display of a host aircraft. The various tasks performed in connection with method 300 may be performed by software, hardware, firmware, or any combination thereof. For illustrative purposes, the following description of method 300 may refer to elements mentioned above in connection with preceding FIGS. In practice, portions of method 300 may be performed by different elements of the described system, e.g., a processor, a display element, or a data communication component. It should be appreciated that method 300 may include any number of additional or alternative tasks, the tasks shown in FIG. 3 need not be performed in the illustrated order, and method 300 may be incorporated into a more comprehensive procedure or method having additional functionality not described in detail herein. Moreover, one or more of the tasks shown in FIG. 3 could be omitted from an embodiment of the method 300 as long as the intended overall functionality remains intact.

In accordance with the exemplary method of FIG. 3, a method for displaying a plurality of vehicles by a display system associated with a first vehicle of the plurality of vehicles, the display system including a data link unit, a processor, and a display, comprising receiving 302 information via the data link unit, the information including a vehicle manufacturer, a vehicle model, a vehicle owner, a vehicle position, and a vehicle category; determining 304 by the processor if a second vehicle of the plurality of vehicles is associated with the information; displaying 306 on the display the plurality of vehicles; and emphasizing 308 on the display the second vehicle if associated with the information.

In accordance with the exemplary method of FIG. 4, a method for displaying a plurality of aircraft by a display system associated with an ownship of the plurality of aircraft, the display system including a data link unit, a processor, and a display, comprising receiving 402 information via the data link unit from a controlling agency, the information including aircraft manufacturer, aircraft model, aircraft service provider, aircraft position, and aircraft category; determining 404 by the processor if a first aircraft of the plurality of aircraft is associated with the information; displaying 406 on the display the plurality of aircraft; and emphasizing 408 on the display the first aircraft if associated with the information.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method for displaying a plurality of aircraft by a display system associated with an ownship (206) located among the plurality of aircraft (208, 210, 212), the display system including a data link unit (120), a processor (104), and a display device (116), comprising:
receiving aircraft related parameters associated with a plurality of aircraft via an Automated Dependent Surveillance Broadcast (ADSB) system;
displaying on the display device (116) the plurality of aircraft;
receiving an air traffic control (ATC) instruction via the data link unit (120), the instruction comprising information including aircraft manufacturer, aircraft model, aircraft service provider, aircraft position, and an aircraft category for a first aircraft associated with the instruction; selecting, by a pilot, the display of additional images (214,216) for said first aircraft associated with the ATC instruction (208); processing aircraft related parameters and the instruction to determine when the first aircraft is among the plurality of aircraft; and
when it is determined that the first aircraft is among the plurality of aircraft, (i) visually emphasizing the first aircraft (208) on the display device, and (ii) displaying alongside the first aircraft, based on said pilot selection, (a) an image resembling a logo of the first aircraft's service provider, and (b) at least one image selected from the group consisting of (1) an image resembling the model of the first aircraft, (2) the category of the first aircraft, (3) an image resembling a logo of the first aircraft's manufacturer.

2. A display system for displaying a plurality of aircraft, the display system associated with a first aircraft (206) of the plurality of aircraft, the display system comprising:
a display unit (116) configured to display the plurality of aircraft based on aircraft related parameters associated with the plurality of aircraft, received via an Automated Dependent Surveillance Broadcast (ADSB) system;
a data link unit (120) configured to receive an air traffic control (ATC) instruction, the instruction comprising information including aircraft manufacturer, aircraft model, aircraft service provider, aircraft position, and aircraft category for a second aircraft associated with the instruction;
a processor (104) coupled to the display unit (116), data link unit (120) and an Automated Dependent Surveillance Broadcast (ADSB) system, the processor configured to (i) receive a pilot selection for the display of additional images (214,216) for said second aircraft associated with the ATC instruction (208); and (ii) process pilot selection, aircraft related parameters received from the ADSB system, and the ATC instruction to determine when the second aircraft is among the plurality of aircraft displayed; and
when it is determined that the second aircraft is among the plurality of aircraft displayed (i) visually emphasize the second aircraft (208), and (ii) display alongside the second aircraft, and responsive to the pilot selection, (a) an image resembling a logo of the second aircraft's service provider, and (b) at least one image selected from the group consisting of (1) an image resembling the model of the second aircraft, (2) the category of the second aircraft, (3) an image resembling a logo of the second aircraft's manufacturer.

## Patentansprüche

1. Verfahren zum Anzeigen einer Vielzahl von Luftfahrzeugen durch ein Anzeigesystem, assoziiert mit einem eigenen Fahrzeug (206), das unter der Vielzahl von Luftfahrzeugen (208, 210, 212) angeordnet ist, wobei das Anzeigesystem eine Datenverknüpfungseinheit (120), einen Prozessor (104) und eine Anzeigevorrichtung (116) enthält, umfassend:
Empfangen von Luftfahrzeug-bezogenen Parametern, assoziiert mit einer Vielzahl von Luftfahrzeugen, über ein automatisiertes abhängiges Überwachungsrundfunk- bzw. ADSB-System;
Anzeigen, auf der Anzeigevorrichtung (116), der Vielzahl von Luftfahrzeugen;
Empfangen einer Luftverkehrssteuerung- bzw. ATC-Anweisung über die Datenverknüpfungseinheit (120), die Anweisung umfassend Informationen, enthaltend Luftfahrzeug-Hersteller, Luftfahrzeug-Modell, Luftfahrzeug-Dienstanbieter, Luftfahrzeug-Position und eine Luftfahrzeug-Kategorie für ein mit der Anweisung assoziiertes erstes Luftfahrzeug;
Auswählen, durch einen Piloten, der Anzeige zusätzlicher Bilder (214, 216) für das mit der ATC-Anweisung assoziierte erste Luftfahrzeug (208);
Verarbeiten von Luftfahrzeug-bezogenen Parametern und der Anweisung zum Bestimmen, wann das erste Luftfahrzeug unter der Vielzahl von Luftfahrzeugen ist; und
wenn bestimmt wird, dass das erste Luftfahrzeug unter der Vielzahl von Luftfahrzeugen ist, (i) visuelles Hervorheben des ersten Luftfahrzeugs (208) auf der Anzeigevorrichtung und (ii) Anzeigen neben dem ersten Luftfahrzeug, basierend auf der Auswahl des Piloten, (a) eines Bilds, das einem Firmenzeichen des Dienstanbieters des ersten Luftfahrzeugs ähnlich ist, und (b) mindestens eines Bildes, ausgewählt aus der Gruppe, bestehend aus (1) einem Bild, das dem Modell des ersten Luftfahrzeugs ähnlich ist, (2) der Kategorie des ersten Luftfahrzeugs, (3) einem Bild, das einem Firmenzeichen des Herstellers des ersten Luftfahrzeugs ähnlich ist.

2. Anzeigesystem zum Anzeigen einer Vielzahl von Luftfahrzeugen, das Anzeigesystem assoziiert mit einem ersten Luftfahrzeug (206) der Vielzahl von Luftfahrzeugen, das Anzeigesystem umfassend:
eine Anzeigeeinheit (116), konfiguriert zum Anzeigen der Vielzahl von Luftfahrzeugen basierend auf Luftfahrzeug-bezogenen Parametern, assoziiert mit der Vielzahl von Luftfahrzeugen, empfangen über ein automatisiertes abhängiges Überwachungsrundfunk- bzw. ADSB-System;
eine Datenverknüpfungseinheit (120), konfiguriert zum Empfangen einer Luftverkehrssteuerung- bzw. ATC-Anweisung, die Anweisung umfassend Informationen, enthaltend Luftfahrzeug-Hersteller, Luftfahrzeug-Modell, Luftfahrzeug-Dienstanbieter, Luftfahrzeug-Position und Luftfahrzeug-Kategorie für ein mit der Anweisung assoziiertes zweites Luftfahrzeug;
einen Prozessor (104), gekoppelt an die Anzeigeeinheit (116), die Datenverknüpfungseinheit (120) und ein automatisiertes abhängiges Überwachungsrundfunk- bzw. ADSB-System, der Prozessor konfiguriert zum (i) Empfangen einer Pilotenauswahl zur Anzeige zusätzlicher Bilder (214, 216) für das mit der ATC-Anweisung assoziierte zweite Luftfahrzeug (208); und (ii) Verarbeiten der Pilotenauswahl, von dem ADSB-System empfangener Luftfahrzeug-bezogener Parameter und der ATC-Anweisung zum Bestimmen, wann das zweite Luftfahrzeug unter der Vielzahl von angezeigten Luftfahrzeugen ist; und
wenn bestimmt wird, dass das zweite Luftfahrzeug unter der Vielzahl von angezeigten Luftfahrzeugen ist, (i) visuelles Hervorheben des zweiten Luftfahrzeugs (208) und (ii) Anzeigen neben dem ersten Luftfahrzeug, und als Reaktion auf der Auswahl des Piloten, (a) eines Bilds, das einem Firmenzeichen des Dienstanbieters des zweiten Luftfahrzeugs ähnlich ist, und (b) mindestens eines Bildes, ausgewählt aus der Gruppe, bestehend aus (1) einem Bild, das dem Modell des zweiten Luftfahrzeugs ähnlich ist, (2) der Kategorie des zweiten Luftfahrzeugs, (3) einem Bild, das einem Firmenzeichen des Herstellers des zweiten Luftfahrzeugs ähnlich ist.

## Revendications

1. Procédé d'affichage d'une pluralité d'aéronefs par un système d'affichage associé à un porteur (206) situé parmi la pluralité d'aéronefs (208, 210, 212), le système d'affichage comportant une unité de liaison de données (120), un processeur (104) et un dispositif d'affichage (116), le procédé comprenant les étapes suivantes :
réception de paramètres d'aéronefs associés à une pluralité d'aéronefs via un système de surveillance dépendante automatique en mode diffusion (ADSB) ;
affichage, sur le dispositif d'affichage (116), de la pluralité d'aéronefs ;
réception d'une instruction du contrôle de la circulation aérienne (ATC), via l'unité de liaison de données (120), l'instruction comprenant des informations comportant un constructeur d'aéronef, un modèle d'aéronef, un fournisseur de services d'aéronef, une position d'aéronef et une catégorie d'aéronef pour un premier aéronef associé à l'instruction ;
sélection, par un pilote, de l'affichage d'images supplémentaires (214, 216) pour ledit premier aéronef associé à l'instruction ATC (208) ;
traitement de paramètres d'aéronefs et de l'instruction aux fins de déterminer lorsque le premier aéronef se trouve parmi la pluralité d'aéronefs ; et
lorsqu'il est déterminé que le premier aéronef se trouve parmi la pluralité d'aéronefs, (i) mise en valeur visuelle du premier aéronef (208) sur le dispositif d'affichage, et (ii) affichage, à côté du premier aéronef, en fonction de ladite sélection par le pilote, (a) d'une image imitant un logo du fournisseur de services du premier aéronef, et (b) d'au moins une image sélectionnée dans le groupe constitué par (1) une image imitant le modèle du premier aéronef, (2) la catégorie du premier aéronef, (3) une image imitant un logo du constructeur du premier aéronef.

2. Système d'affichage permettant l'affichage d'une pluralité d'aéronefs, le système d'affichage étant associé à un premier aéronef (206) parmi la pluralité d'aéronefs, le système d'affichage comprenant :
une unité d'affichage (116) configurée pour afficher la pluralité d'aéronefs en fonction de paramètres d'aéronefs associés à la pluralité d'aéronefs, reçus via un système de surveillance dépendante automatique en mode diffusion (ADSB) ;
une unité de liaison de données (120) configurée pour recevoir une instruction du contrôle de la circulation aérienne (ATC), l'instruction comprenant des informations comportant un constructeur d'aéronef, un modèle d'aéronef, un fournisseur de services d'aéronef, une position d'aéronef et une catégorie d'aéronef pour un deuxième aéronef associé à l'instruction ;
un processeur (104) relié à l'unité d'affichage (116), à l'unité de liaison de données (120) et à un système de surveillance dépendante automatique en mode diffusion (ADSB), le processeur étant configuré pour (i) recevoir une sélection, par un pilote, pour l'affichage d'images supplémentaires (214, 216) pour ledit deuxième aéronef associé à l'instruction ATC (208) ; et (ii) traiter la sélection par le pilote, des paramètres d'aéronefs reçus depuis le système ADSB et l'instruction ATC aux fins de déterminer lorsque le deuxième aéronef se trouve parmi la pluralité d'aéronefs affichée ; et lorsqu'il est déterminé que le deuxième aéronef se trouve parmi la pluralité d'aéronefs affichée, (i) mettre visuellement en valeur le deuxième aéronef (208), et (ii) afficher, à côté du deuxième aéronef, en réponse à la sélection par le pilote, (a) une image imitant un logo du fournisseur de services du deuxième aéronef, et (b) au moins une image sélectionnée dans le groupe constitué par (1) une image imitant le modèle du deuxième aéronef, (2) la catégorie du deuxième aéronef, (3) une image imitant un logo du constructeur du deuxième aéronef.
